# EUROPEAN PATENT APPLICATION

(11) **EP 2 008 754 A1**
(43) Date of publication of application: **31.12.2008**
(21) Application number: 07714341.0
(22) Date of filing: 16.02.2007
(51) Int. Cl.: B23K 26/14, B23K 9/16, B23K 9/23, B23K 26/20, B23K 103/04, B23K 103/16

(54) **SHIELD GAS FOR HYBRID WELDING AND METHOD OF HYBRID WELDING USING THE SAME**

(30) Priority: 17.02.2006 JP 2006041091; 17.02.2006 JP 2006041092
(71) Applicant: Taiyo Nippon Sanso Corporation, Shinagawa-ku, Tokyo 1428558 (JP)
(72) Inventor: KAMEI, Toshikazu, Tokyo 142-8558 (JP)
(74) Representative: Waldren, Robin Michael
(86) International application number: PCT/JP2007/052811
(87) International publication number: WO 2007/094442

(57) **Abstract**

The present invention relates to a hybrid welding method for a galvannealed steel plate. Specifically, the object of the present invention is to provide a welding method and a shielding gas used therefor that can prevent surface defects (pits) generated on the bead surface and burn-through while lap-welding. Furthermore, another object of the present invention is to provide a welding method and a shielding gas used therefor wherein bead irregularities (defects in formation of a continuous bead) such as humping is not present, and generation of pits or undercuts on the bead surface can be prevented.

## Description

### TECHNICAL FIELD

The present invention relates to a hybrid welding method applied to a galvannealed steel plate. The present invention specifically relates to a welding method and a shielding gas used therefore that can prevent surface defects (pits) and burn-through that generate on the bead surface in lap welding. Furthermore, the present invention specifically relates to a welding method and a shielding gas used in the welding method that exhibit few bead irregularities (defects in formation of a continuous bead) due to humping or the like in lap fillet welding and that can further prevent pits or undercuts from generating on the bead surface.

This application claims the priority of Japanese Patent Application Nos. 2006-041091 and 2006-041092, filed on February 17th, 2006, the contents of which are incorporated herein by reference.

### BACKGROUND ART

A galvannealed steel plate is a steel plate that is subjected to a rust-proofing treatment mainly using zinc. Because the galvannealed steel plate has excellent corrosion resistance, the galvannealed steel plate is widely used as a material for an auto body widely in the automotive industry, and lap resistance welding is used to weld the material.

Such resistance welding is a welding method wherein an electric current is applied to a joining area of welded materials, the temperature of the joining area is increased mainly due to resistance heat generation, and pressure is applied thereto, thereby joining the materials.

However, resistance welding requires such pressurization to the joining area. Accordingly, the method is not suitable for one side welding.

On the other hand, laser welding can be mentioned as a welding method that can be applied as one side welding. Laser welding can improve welding speed, and can prevent welding distortion (can achieve low heat input). However, because the melting point of zinc (906°C) on the surface of the galvannealed steel plate is lower than the melting point of a base material (1535°C), the plating layer present in the lapping portion of steel plates evaporates during welding whereby zinc vapor is generated. Such zinc vapor is not released from the molten metal during the solidification process, and remains in the molten metal as weld defects such as blowholes or pits (for example, a blowhole that opens from the bead surface).

In particular, when welding is conducted where galvannealed steel plates come into contact with each other, such zinc vapor can be released only from the front surface and the back surface of the bead. Accordingly, the molten metal is blown away by the zinc vapor emitted from the molten metal, and this results in deficiency of the bead shape and the joint strength.

Because of this, in order to achieve stable laser welding with respect to a galvannealed steel plate, it is required to intentionally provide a space between steel plates. However, such a process of providing a space is not practical in terms of productivity or costs. Furthermore, when such a space is excessively large, burn-through will occur, and steel plates may not be joined.

As an example of a method for solving these deficiencies, application of a hybrid welding where arc welding is combined with laser welding is known, as disclosed by Japanese Unexamined Patent publication No. 2002-160082.

With regard to such a conventional hybrid welding method, generation of blowholes can be prevented as much as possible and a preferable bead can be obtained in lap welding of galvannealed steel plates even if a space is not present between the steel plates. In this case, an inert gas such as argon gas is preferably used as a shielding gas. Furthermore, a gas wherein carbon dioxide gas is mixed in argon gas within a range of 10% to 100%; or a gas wherein hydrogen gas or helium gas is mixed in argon gas within a range of 2% to 20% can also be used in the method.

In the hybrid welding wherein laser welding is combined with arc welding, a shielding gas for arc welding is mainly used as a shielding gas that shields a molten pool while welding. In general, an inert gas (i.e. argon gas or helium gas) containing carbon dioxide gas or oxygen gas is frequently used as such a shielding gas.

As a welding method that improves welding qualities of galvannealed steel plates, a welding method wherein a shielding gas containing 15% to 25% of carbon dioxide gas and the balance being an inert gas is used in laser welding is proposed (Japanese Unexamined Patent Publication No. H6-328279). Furthermore, a welding method wherein a shielding gas containing 80% to 95% (volume ratio) of carbon dioxide gas and the balance being an inert gas is used is proposed (Japanese Unexamined Patent Publication No. H2001-138085).

With regard to a welding method that prevents internal defects such as blowholes generated when conducting a hybrid welding, a welding technique for a metal material wherein a shielding gas for arc welding containing 10% to 80% of argon gas and the balance being helium gas is used is proposed (Japanese Unexamined Patent Publication No. 2003-164983).

Galvannealed steel plates used widely as materials such as automotive suspension parts are steel plates that are subjected to rust preventive surface treatment mainly using zinc. Therefore, the materials have excellent corrosion resistance. The materials used as suspension members are comparatively thick. Accordingly, fillet welding wherein an arc welding method and an automatic welding machine is used is general as a joining method for such suspension parts.

However, because the melting point of zinc (906°C) on the surface of the galvannealed steel plate is lower than the melting point of iron (1535°C), the plating layer present in the lapping portion of steel plate evaporates during welding whereby zinc vapor is generated. Such zinc vapor is not released from molten metal during the solidification process, thereby causing weld defects such as blowholes or pits. If such pits are generated therein, an objective strength or corrosion resistance cannot be achieved, and it will also require time to repair the defects.

In particular, if welding is conducted where steel plates come into contact with each other, zinc vapor can be released only from the front side of the bead.

### Consequently, zinc vapor released from the molten metal disturbs the molten pool, and the arc will not be stable.

Accordingly, if high-speed welding is conducted with respect to galvannealed steel plates, pits or blowholes will be generated, and bead irregularities or spatters will be further increased. Therefore, this is not preferable.

On the one side, an increase in welding speed, which improves productivity, has been highly sought in weld working using an automatic welding machine. However, in a conventional welding method, even if a pulsed arc that suppresses spatter generation is used, the following defects will occur and the upper limit of the welding speed will be about 150 cm/min.
(1) a molten pool cannot follow arc-moving speed whereby an irregular bead called a "humping bead" where the deposited metal discontinuously and repeatedly humps along the moving direction of the arc is generated;
(2) When the arc length is adjusted to short to prevent the generation of irregular beads, short circuiting frequently occurs, and many spatters are generated. Consequently, the deposited metal is insufficiently provided. If an electric current is increased in order to compensate the shortage of the deposited metal, generation of spatters further becomes severe; and
(3) the cross section of the shape of the bead in the vertical direction to the moving direction of the arc will be formed into a projected shape, a weld defect called "undercut" where a groove is formed along one side or both sides of the cross section of the bead is generated, and becomes a stress-concentration part.

As an example of a method of solving such problems, application of a hybrid welding wherein arc welding is combined with laser welding is known, as disclosed by Japanese Unexamined Patent Publication No. 2002-66774. In this hybrid welding method, even if a space is not present between lapped galvannealed steel plates in lap welding or lap fillet welding of galvannealed steel plates, generation of blowholes can be prevented, thereby providing a preferable bead.

Furthermore, as an example of a welding method that prevents internal defects such as blowholes from being generated while conducting a hybrid welding, a method of welding metal materials wherein a shielding gas for arc welding containing 10% to 80% of argon gas and the balance being helium gas is used is proposed (see Japanese Unexamined Patent Publication No. 2003-164983).
Patent Document 1: Japanese Unexamined Patent Publication No. 2002-160082.
Patent Document 2: Japanese Unexamined Patent Publication No. H6-328279.
Patent Document 3: Japanese Unexamined Patent Publication No. 2001-138085.
Patent Document 4: Japanese Unexamined Patent Publication No. 2003-164983.
Patent Document 5: Japanese Unexamined Patent Publication No. 2002-66774.

### DISCLOSURE OF THE INVENTION

However, the present inventors applied the hybrid welding disclosed by Japanese Unexamined Patent Publication No. 2002-160082 to lap welding of galvannealed steel plates to confirm the qualities thereof. As a result, not only blowholes but also pits were generated on the bead surface when only applying the hybrid welding to lap welding of galvannealed steel plates where the gap was zero, and sufficient welding could not be achieved. Furthermore, even if the shielding gas having a preferable composition disclosed in the patent publication was applied, the generated defects could not be alleviated.

With regard to the shielding gas disclosed by Japanese Unexamined Patent Publication No. 2003-164983, a mixed gas of argon gas and expensive helium gas is used to prevent welding defects from being generated. Therefore, the shielding gas is costly. Furthermore, the shielding gas does not contain an element such as carbon dioxide gas or oxygen gas that promotes stabilization of arc or discharge of zinc vapor. Therefore, droplet transfer becomes unstable in hybrid welding of galvannealed steel plates, thereby generating welding defects.

Furthermore, the present inventors evaluated in hybrid welding the shielding gas disclosed by Japanese Unexamined Patent Publication No. H6-328279, which improves welding qualities in laser welding. As a result, even if 15% to 25% of carbon dioxide gas was simply mixed therein, the bead shape was not stable, and generation of pits could not be suppressed at a sufficient level.

Additionally, even if the volume ratio of the carbon dioxide gas was adjusted to 80% to 95%, as disclosed by Japanese Unexamined Patent Publication No. 2001-138085, generation of pits could not be suppressed at a sufficient level, and generation of spatters was also significant. Thus, the results were not acceptable.

Based on the above-described grounds, an object of the present invention is to alleviate welding defects such as generation of pits and burn-through on the bead surface by a cost-effective and simple method using a mixed gas of argon gas, carbon dioxide gas, and oxygen gas, which are mixed therein at an appropriate ratio, as a shielding gas for galvannealed steel plate lap hybrid welding.

Moreover, in a welding method disclosed by Japanese Unexamined Patent Publication No. 2002-66774, welding evaluation was conducted by counting the total number of blowholes and pits generated therein. In other words, evaluation was not conducted by only counting the number of the generated pits that require repair after welding and that cause a decrease in corrosion resistance. Additionally, welded joint tensile test (weld joint evaluation) was conducted in Examples thereof. However, the bead shape was not evaluated, and whether notches such as undercuts, which fatigue cracks may be caused due to stress concentration thereto, were present or not was not explicitly shown.

Furthermore, with regard to the shielding gas disclosed by Japanese Unexamined Patent Publication No. 2003-164983, a mixed gas of argon gas and expensive helium gas is used to prevent generation of welding defects. Therefore, the shielding gas is costly. Additionally, because the shielding gas does not contain an element such as carbon dioxide gas or oxygen gas, which promotes stabilization of arc or discharge of zinc vapor, droplet transfer becomes unstable in hybrid welding of galvannealed steel plates, thereby generating welding defects.

With regard to hybrid welding, in order to suppress the generation of pits or welding defects in lap welding of galvannealed steel plates, laser output may be increased to conduct full penetration welding, thereby actively discharging the zinc vapor from the front side and back side of the bead; or a space may be provided between the material plates.

However, such increase of laser output will bring about a problem in which the facility cost will also be increased. Furthermore, it is necessary to slow down the welding speed to achieve the full penetration welding when using a thicker joint. Additionally, when providing a space between the plates, generation of pits can be prevented. However, it will be difficult to control the gap between the plates, and this was not practical in terms of productivity and costs.

Based on the grounds, another object of the present invention is to prevent generation of pits on the bead surface, bead irregularities, undercuts, among others, by a cost-effective and simple method using a mixed gas of argon gas, carbon dioxide gas, and oxygen gas, which are mixed therein at an appropriate ratio, as a shielding gas for galvannealed steel plate-lap fillet hybrid welding.
(1) Specifically, an aspect of the present invention is to provide a shielding gas for hybrid welding which is used for lap welding of steel plates by using laser welding and arc welding in combination where at least one of the steel plates is a galvannealed steel plate, the shielding gas including: a carbon dioxide gas; an oxygen gas; and the balance being an argon gas, wherein mixing ratios of the carbon dioxide gas and the oxygen gas are adjusted to a range of 15 ≤ A ≤ 50, 5 ≤ B ≤ 9, and B ≥ 21 - 0.8A when the gap between the steel plates is zero, where "A" refers to the volume percentage of the carbon dioxide gas in the shielding gas, and "B" refers to the volume percentage of the oxygen gas in the shielding gas;
(2) Another aspect of the present invention is to provide a shielding gas for hybrid welding which is used for lap welding of steel plates by using laser welding and arc welding in combination where at least one of the steel plates is a galvannealed steel plate, the shielding gas including: a carbon dioxide gas; an oxygen gas; and the balance being an argon gas, wherein mixing ratios of the carbon dioxide gas and the oxygen gas are adjusted to a range of 15 ≤ A ≤ 50, 3 ≤ B ≤ 9, and B ≥ 0.1A when G/T is 1 or less and the thicknesses of the steel plates are the same, where "A" refers to the volume percentage of the carbon dioxide gas in the shielding gas, "B" refers to the volume percentage of the oxygen gas in the shielding gas, "G" refers to the gap between steel plates, and "T" refers to the thickness of the steel plate adjacent to a welding torch;
(3) Yet another aspect of the present invention is to provide a shielding gas for hybrid welding which is used for lap welding of steel plates by using laser welding and arc welding in combination where at least one of the steel plates is a galvannealed steel plate, the shielding gas including: a carbon dioxide gas; an oxygen gas; and the balance being an argon gas, wherein mixing ratios of the carbon dioxide gas and the oxygen gas are adjusted to a range of 10 ≤ A ≤ 50, 3 ≤ B ≤ 9, B ≥ 0.1A, and B ≥ 15 - 0.6A when G/T is 1 or less and the thicknesses of the steel plates are different, where "A" refers to the volume percentage of the carbon dioxide gas in the shielding gas, "B" refers to the volume percentage of the oxygen gas in the shielding gas, "G" refers to the gap between steel plates, and "T" refers to the thickness of the steel plate adjacent to a welding torch;
(4) Yet another aspect of the present invention is to provide a hybrid welding method for lap welding of steel plates by using laser welding and arc welding in combination where at least one of the steel plates is a galvannealed steel plate, the method including: using the shielding gas according to the above-described (1) when G/T is 0; using the shielding gas according to the above-described (2) when G/T is 1 or less and the thicknesses of the steel plates are the same; or using the shielding gas according to the above-described (3) when G/T is 1 or less and the thicknesses of the steel plates are different;
(5) Yet another aspect of the present invention is to provide a shielding gas for hybrid welding which is used for lap fillet welding of steel plates that are both galvannealed steel plates by using laser welding and arc welding in combination, the shielding gas including: a carbon dioxide gas; an oxygen gas; and the balance being an argon gas, wherein mixing ratios of the carbon dioxide gas and the oxygen gas are adjusted to a range of 3 ≤ A ≤ 25, 5 ≤ B ≤ 13, and B ≥ 10 - 0.33A, where "A" refers to the volume percentage of the carbon dioxide gas in the shielding gas, and "B" refers to the volume percentage of the oxygen gas in the shielding gas;
(6) Yet another aspect of the present invention is to provide a shielding gas for hybrid welding which is used for lap fillet welding of steel plates by using laser welding and arc welding in combination where one of the steel plates is a galvannealed steel plate, the shielding gas including: a carbon dioxide gas; an oxygen gas; and the balance being an argon gas, wherein mixing ratios of the carbon dioxide gas and the oxygen gas are adjusted to a range of 3 ≤ A ≤ 25, 5 ≤ B ≤ 13, and B ≥ 10.5 - 0.5A, where "A" refers to the volume percentage of the carbon dioxide gas in the shielding gas, and "B" refers to the volume percentage of the oxygen gas in the shielding gas;
(7) Yet another aspect of the present invention is to provide a hybrid welding method for lap fillet welding of steel plates that are both galvannealed steel plates by using laser welding and arc welding in combination, the method including: using the shielding gas according to the above-described (5);
(8) Yet another aspect of the present invention is to provide a hybrid welding method for lap fillet welding of steel plates by using laser welding and arc welding in combination where one of the steel plates is a galvannealed steel plate, the method including: using the shielding gas according to the above-described (6).

The present inventors discovered that generation of pits could be suppressed in lap welding of a galvannealed steel plate using a hybrid welding at a welding speed of 1.5 m/min or higher, which is equivalent to that of laser welding even if the gap is zero by way of adjusting the ratios of the carbon dioxide gas, the oxygen gas and the argon gas in the shielding gas depending on the thickness of the lapped steel plates and the gap between the steel plates.

It was discovered that an effect in which burn-through or hole-formation of the welded metal adjacent to the welding torch could be prevented was achieved by using the shielding gas having the above-described composition and by adjusting the gap (G) between galvannealed steel plates to the thickness (T) or less of the galvannealed steel plate adjacent to the welding torch (i.e. to a range where G/T = 1 or less) even if the gap is present between the welded galvannealed steel plates.

The effect can be obtained when using a joint where, for example, three or more galvannealed steel plates are piled, burn-through or hole-formation of the welded metal at the upper side can be prevented by adjusting the gap to the thickness of the top plate or less.

When high-speed welding is conducted, shielding properties may be lowered. However, if another shielding-gas nozzle is provided ahead of the welding direction, the same effects can be achieved.

Moreover, according to the present invention, the above mixed gas having the composition is used in lap fillet welding of galvannealed steel plates using a hybrid welding. Therefore, even if the welding method is a type of non-penetration welding and the gap between the steel plates is 0 mm, generation of pits can be prevented, and generation of bead irregularities such as humping frequently occurring in high-speed welding can also be prevented.

In addition, wettability is excellent and a broader and flat bead can be formed. Accordingly, it was discovered that an effect wherein generation of notches such as undercuts was prevented could be achieved in the present invention.

Furthermore, a preferred state of welding where generation of spatters is less can be obtained. Therefore, adhesion of spatters to a laser optical member such as protective glass can be suppressed, and the number of times protective glass exchanged can be decreased.

Additionally, when conducting high-speed welding, shielding properties may be lowered. However, by providing another shielding-gas nozzle ahead of the moving direction, the same effects can be achieved.

### BRIEF DESCRIPTION OF THE DRAWINGS

Figure 1 is a schematic diagram showing a main body of a welding machine used in hybrid welding (lap welding) of the present invention.
Figure 2 is a diagram showing results of Experiment 1 in the present invention.
Figure 3 is a diagram showing results of Experiment 2 in the present invention.
Figure 4 is a diagram showing results of Experiment 3 in the present invention.
Figure 5 is a schematic diagram showing an example of the hybrid welding method (lap fillet welding) of the present invention.
Figure 6 is a schematic diagram showing an example of the hybrid welding method (lap fillet welding) of the present invention.
Figure 7 is a diagram illustrating an undercut.
Figure 8 is a diagram showing results of Experiment 4 in the present invention.
Figure 9 is a diagram showing results of Experiment 5 in the present invention.

The reference numeral "1" refers to a laser head; the reference numeral "2" refers to an optical fiber; the reference numeral "3" refers to a welded material; the reference numeral "4" refers to an arc torch; the reference numeral "5" refers to a wire; the reference numeral "6" refers to a tip member; the reference numeral "7" refers to a pipe; the reference numeral "8" refers to a shielding gas inflow channel; the reference numeral "9" refers to an assist gas nozzle; and the reference numeral "10" refers to a pipe.

### BEST MODE FOR CARRYING OUT THE INVENTION

### (Hybrid welding of a lapped joint of a galvannealed steel plate)

Hereinafter, the hybrid welding method and the shielding gas used therefor of the present invention will be described in detail with regard to the embodiments where steel plates are lap-welded and at least one of the welded steel plates is a galvannealed steel plate.

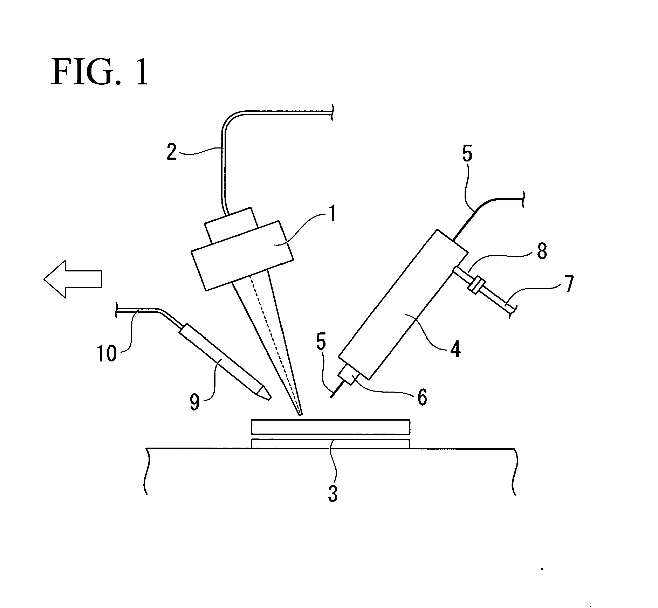

Figure 1 is a schematic diagram showing a main body of a welding machine used in the hybrid welding method of the present invention, and the reference numeral "1" in the figure refers to a laser head.

An optical lens system including a condenser lens, etc. is installed in the laser head 1.

A laser light having a wavelength of 1.064 µm emitted from a laser light source such as a YAG laser generator (not shown in figures) is inputted to the laser head 1 through an optical fiber 2. The laser light is condensed in the laser head 1, thereby forming into a beam. Then, the beam is irradiated to a welded portion of a welded material 3.

The reference numeral "4" refers to an arc torch. A wire 5 (which is a solid type for a soft steel) is supplied from a wire-supplying device (not shown in figures) to the arc torch 4, and the tip of the wire 5 projects from a tip member 6 to the direction of the welded portion, and the wire 5 functions as a welding tip.

The tip member 6 includes a blast nozzle which a shielding gas is ejected from where the shielding gas is ejected from around the circumference of the wire 5. The shielding gas is ejected from a shielding gas-supplying device (not shown in figures), flows into a pipe 7, and is supplied to a shielding gas inflow channel 8 of the arc torch 4. Then, the supplied shielding gas is ejected from the blast nozzle of the tip member 6 to the welded portion.

The wire 5 is connected to a welding power supply (not shown in figures) through the wire-supplying device. Accordingly, arc is blown from the tip of the wire 5 to the welded portion. The arrow in Figure 1 refers to a welding moving direction.

The reference numeral "9" refers to an assist gas nozzle in the figures. The assist gas nozzle 9 is provided ahead of the welding moving direction, and is connected to an assist gas-supplying source (not shown in figures) through a pipe 10. Accordingly, the assist gas is ejected from the tip of the nozzle to the welded portion of the welded material 3.

As shown in Figure 1, the center axis of the arc torch 4, the optical axis of the laser light, and the center axis of the assist gas nozzle 9 are inclined with respect to the a vertical line. These members are disposed such that the inclining direction of the arc torch 4 is opposite to the inclining direction of the laser light axis and the assist gas nozzle 9.

Hereinafter, the hybrid welding method will be described where a galvannealed steel plate is welded as the welded material 3 in lap welding.

The welded object of the galvannealed steel plate is obtained by subjecting one side or both sides of a base material of a cold-reduced steel sheet to electrolytic zinc coated and/or hot dip zinc coated. The zinc coating weight thereof is within a range of 10 g/m² to 60 g/m². It is preferable that the sulfur content in the zinc be 0.02 wt% or less.

At leaset one plate of the welded materials 3 may be a galvannealed steel plate. In this case, the other welded materials may be a galvannealed steel plate or other types of steel plate (for example, a cold-reduced steel sheet).

The thickness of the galvannealed steel plate may be generally within a range of 0.6 mm to 2.3 mm. However, the thickness is not limited to such a range. With regard to a mode of lapping the welded material, two or more galvannealed steel plates may be lapped where a space may be provided between the materials or not. When a space is provided between lapped materials, the gap "G" (mm) may be equal to the plate thickness "T" (mm) of the galvannealed steel plate located adjacent to the welding torch or may be less than the thickness "T"; in other words, it is preferable that G/T be 1 or less.

A laser light whose wavelength is 1.064 µm and whose output power is 1 kW to 20 kW is emitted from the laser head 1, and the laser beam is irradiated to the welded portion of the welded material 3. Additionally, other than such a laser light, a YAG (Yb) laser whose wavelength is 1.03 µm; a carbon dioxide gas laser whose wavelength is 10.6 µm; or a semiconductor laser whose wavelength is 0.8 µm or 0.95 µm can be used.

A direct current is applied to the wire 5 in the arc torch 4 whereby arc is blown from the tip of the wire 5 to the welded portion. Simultaneously, the shielding gas is ejected from the blast nozzle of the tip member 6 of the arc torch 4 to the welded portion. A solid type of wire for soft steel may be used as the wire 5. In order to prevent burn-through of the base material, it is preferable that the diameter of the wire be within a range of 0.8 mm to 1 mm.

The composition of the shielding gas includes an argon gas, a carbon dioxide gas and an oxygen gas. The mixing ratio of the carbon dioxide gas and the oxygen gas are adjusted to a range of 15 ≤ A ≤ 50, 5 ≤ B ≤ 9.0, and B ≥ 21 - 0.8 A when a gap "G" between the galvannealed steel plate and the other steel plate is 0 mm (i.e. at least two steal plates come into contact with each other), where "A" refers to the volume percentage of the carbon dioxide gas in the shielding gas, and "B" refers to the volume percentage of the oxygen gas in the shielding gas.

When the mixing ratio is within such a range, generation of pits can be suppressed and burn-through or hole-formation of the welded metal adjacent to the welding torch can be prevented.

The above-described mixing ratio of the carbon dioxide gas and the oxygen gas of the present invention was obtained by evaluating welding workability, generation status of defects in the welded portion or the like in actual welding operation, as described in experimental examples below.

The flowing rate of the emitted shielding gas is generally within a range of 10 L/minute to 30 L/minute.

Additionally, in the above-described welding method of the present invention, it is preferable that an assist gas be blown from the assist gas nozzle 9 to the welded portion if the welding speed is 200 cm/minute or higher. A gas having the same composition as the shielding gas is used as the assist gas. The flowing rate is generally within a range of 10 L/minute to 40 L/minute.

Specifically, when the welding speed is higher, shielding of the molten pool by the shielding gas is disturbed, thereby lowering shielding properties. However, if such an assist gas is blown thereto, deterioration of shielding properties can be prevented whereby preferable welding can be conducted even in high-speed welding.

Moreover, in the present invention, the composition of the shielding gas can be slightly modified to conduct hybrid welding when a space is provided between galvannealed steel plates while welding and the ratio G/T is 1 or less where "G" (mm) refers to the gap and "T" (mm) refers to the thickness of the steel plate disposed adjacent to the welding torch.

Specifically, a shielding gas including: a carbon dioxide gas; an oxygen gas; and the balance being an argon gas, wherein the mixing ratio of the carbon dioxide gas and the oxygen gas is adjusted to a range of 15 ≤ A ≤ 50, 3 ≤ B ≤ 9, and B ≥ 0.1A may be used when G/T is 1 or less and the thicknesses of the steel plates are the same, where "A" refers to the volume percentage of the carbon dioxide gas in the shielding gas, and "B" refers to the volume percentage of the oxygen gas in the shielding gas. Accordingly, generation of pits can be suppressed, and burn-through or hole-formation in welded metal adjacent to the welded torch can be prevented in the same manner as described above.

Furthermore, when G/T is 1 or less and the thicknesses of the steel plates are different, a shielding gas including: a carbon dioxide gas; an oxygen gas; and the balance being an argon gas, wherein the mixing ratio of the carbon dioxide gas and the oxygen gas is adjusted to a range of 10 ≤ A ≤ 50, 3 ≤ B ≤ 9, B ≥ 0.1 A, and B ≥ 15 - 0.6A is used, where "A" refers to the volume percentage of the carbon dioxide gas in the shielding gas, "B" refers to the volume percentage of the oxygen gas in the shielding gas, "G" refers to a gap between steel plates, and "T" refers to the thickness of the steel plate adjacent to a welding torch. Accordingly, generation of pits can be suppressed, and burn-through or hole-formation in the welded metal adjacent to the welded torch can be prevented in the same manner as described above.

### (Hybrid welding of a lap fillet joint of a galvannealed steel plate)

Hereinafter, the hybrid welding method of the present invention and the shielding gas used therefor will be described with regard to preferable embodiments where welded steel plates, which are both galvannealed steel plates or one of which is a galvannealed steel plate, are subjected to lap fillet welding.

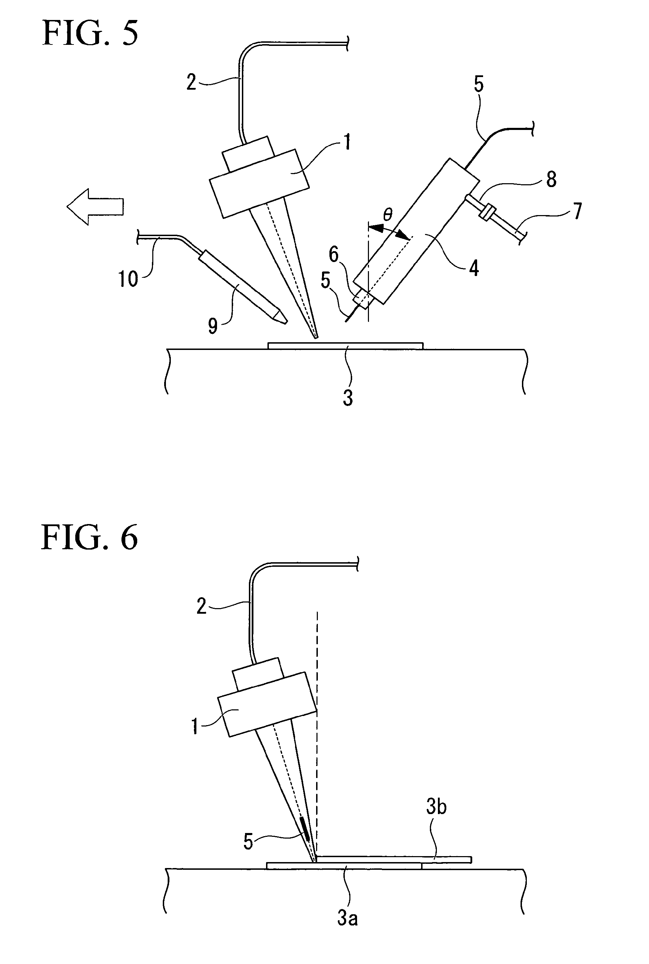

Figure 5 shows an example of the hybrid welding method of the present invention. In Figure 5, the reference numeral "1" refers to a laser head.

An optical lens system including a condenser lens, etc. is installed in the laser head 1.

A laser light emitted from a laser light source such as a YAG laser generator (not shown in figures) is inputted to the laser head 1 through an optical fiber 2. The laser light is condensed in the laser head 1, thereby forming a beam. Then, the beam is irradiated to a welded portion of a welded material 3 which is formed by piling two galvannealed steel plates.

The reference numeral "4" refers to an arc torch. A wire 5 is supplied from a wire-supplying device (not shown in figures) to the arc torch 4, and the tip of the wire 5 projects from a tip member 6 of the arc torch 4 to the direction of the welded portion, and the wire 5 functions as a welding tip.

The tip member 6 includes a blast nozzle which a shielding gas is ejected from where the shielding gas is ejected from around the circumference of the wire 5. The shielding gas is ejected from a shielding gas-supplying device (not shown in figures), flows into a pipe 7, and is supplied to a shielding gas inflow channel 8 of the arc torch 4. Then, the supplied shielding gas is ejected from the blast nozzle of the tip member 6 to the welded portion.

The wire 5 is connected to a welding power supply (not shown in figures) through the wire-supplying device. Accordingly, arc is blown from the tip of the wire 5 to the welded portion. The arrow in Figure 5 refers to the welding moving direction. The angle θ between the center axis of the arc torch 4 and the welded material 3 refers to a push angle of the arc torch 4. The angle θ may be generally within a range of 0° to 45°.

The reference numeral "9" refers to an assist gas nozzle in the figures. The assist gas nozzle 9 is provided ahead of the welding moving direction, and is connected to an assist gas-supplying source (not shown in figures) through a pipe 10. Accordingly, the assist gas is ejected from the tip of the nozzle to the welded portion of the welded material 3.

As shown in Figure 5, the center axis of the arc torch 4, the optical axis of the laser light, and the center axis of the assist gas nozzle 9 are inclined with respect to the a vertical line. However, it is preferable that the angle θ between the center axis of the arc torch 4 and the welded material 3 be 0° (zero degree) as long as the arc torch 4 does not interfere with the laser beam. These members are disposed such that the inclining direction of the arc torch 4 is opposite to the inclining direction of the laser light axis and the assist gas nozzle 9 unless the angle θ between the center axis of the arc torch 4 and the welded material 3 is 0° (zero degree).

Figure 6 shows a side view of the configuration shown in Figure 5. Two plates of galvannealed steel plates 3a and 3b are piled where the upper steel plate is displaced to an extent such that a step is provided therein. The portion of the step is arranged as a welded portion. That is, a laser beam is irradiated thereto, and the tip portion of the arc generated from the wire 5 of the arc torch (not shown in the figure) reaches the welded portion.

The welded object of the galvannealed steel plate is obtained by subjecting one side or both sides of a base material of a cold-reduced steel sheet to electrolytic zinc coated and/or hot dip zinc coated. The zinc coating weight thereof is within a range of 10 g/m² to 60 g/m². It is preferable that the sulfur content in the zinc be 0.02wt% or less.

The thickness of the galvannealed steel plate may be generally within a range of 1.0 mm to 3.2 mm. However, the thickness is not limited to such a range. With regard to a mode of lapping the welded material, two or more galvannealed steel plates are lapped such that the steel plates come into contact with each other to enable lap fillet welding, as shown in Figure 6.

A laser light whose output power is 1 kW to 20 kW is emitted from the laser head 1, and the laser beam is irradiated to the welded portion of the welded material 3. Additionally, other than such a laser light, a YAG (Yb) laser whose wavelength is 1.03 µm; a carbon dioxide gas laser whose wavelength is 10.6 µm; or a semiconductor laser whose wavelength is 0.8 µm or 0.95 µm can be used.

A direct current is applied to the wire 5 in the arc torch 4 whereby arc is blown from the tip of the wire 5 to the welded portion. Simultaneously, the shielding gas is ejected from the blast nozzle of the tip member 6 of the arc torch 4 to the welded portion.

A solid type of wire for carbon steel may be used as the wire 5. For example, a solid wire for MAG, standardized as "JIS Z3312" (for example, YGW-15, -16, -17, or -19) can be used. It is preferable that the diameter of the wire be 1.0 mm to 1.2 mm.

When two welded steel plates are both galvannealed steel plates, a shielding gas including: an argon gas; a carbon dioxide gas; and an oxygen gas, wherein the mixing ratio of the carbon dioxide gas and the oxygen gas is adjusted to a range of 3 ≤ A ≤ 25, 5 ≤B ≤ 13, and B ≥ 10 - 0.33A is used as the above-described shielding gas, where "A" refers to the volume percentage of the carbon dioxide gas in the shielding gas, and "B" refers to the volume percentage of the oxygen gas in the shielding gas.

Within such a range of the mixing ratio, generation of pits can be prevented, generation of bead irregularities such as humping frequently occurring in high-speed welding can also be prevented. Furthermore, wettability is sufficient and a broader and flat bead can be formed. Therefore, an effect wherein generation of notches such as undercuts can be prevented can also be achieved.

By using a shielding gas having a composition fulfilling such a range, generation of bead irregularities, pits and undercuts are not present, and generation of spatters can be sufficiently suppressed.

The above-described mixing ratio of the carbon dioxide gas and the oxygen gas of the present invention was obtained by evaluating welding workability, generation status of defects in the welded portion or the like in actual welding operation, as described in experimental examples below.

The flowing rate of the emitted shielding gas is generally within a range of 10 L/minute to 30 L/minute.

Additionally, in the above-described welding method of the present invention, it is preferable that an assist gas be blown from the assist gas nozzle 9 to the welded portion if the welding speed is 200 cm/minute or higher. A gas having the same composition as the shielding gas is used as the assist gas. The flowing rate is generally within a range of 10 L/minute to 40 L/minute.

Specifically, when the welding speed is higher, shielding of the molten pool by the shielding gas is disturbed, thereby lowering shielding properties. However, if such an assist gas is blown thereto, deterioration of shielding properties can be prevented whereby preferable welding can be conducted even in high-speed welding.

When one of the welded steel plates is a galvannealed steel plate and the other steel plate is another type of steel plate such as a cold-reduced steel sheet in the above-described welding method of the present invention, a shielding gas including: an argon gas; a carbon dioxide gas; and an oxygen gas, wherein the mixing ratio of the carbon dioxide gas and the oxygen gas is adjusted to a range of 3 ≤ A ≤ 25, 5 ≤ B ≤ 13, and B ≥ 10.5 - 0.5A is used as the shielding gas, where "A" refers to the volume percentage of the carbon dioxide gas in the shielding gas, and "B" refers to the volume percentage of the oxygen gas in the shielding gas.

Within such a range of the mixing ratio, generation of pits can be prevented, generation of bead irregularities such as humping frequently occurring in high-speed welding can also be prevented. Furthermore, wettability is sufficient and a broader and flat bead can be formed. Therefore, an effect wherein generation of notches such as undercuts can be prevented can also be achieved.

By using a shielding gas having a composition fulfilling such a range, generation of bead irregularities, pits and undercuts are not present, and generation of spatters can be sufficiently suppressed, as demonstrated by experimental examples described below..

### EXAMPLES

Hereinafter, the present invention will be further described in detail with reference to Examples.

### (Hybrid welding of a lapped joint of a galvannealed steel plate)

Hybrid welding was conducted using a shielding gas and a welding machine shown in Figure 1.

Welding was conducted with respect to a lap joint where steel plates were piled under the following conditions. The shielding gas was supplied from an arc torch. An alloyed hot dip galvannealed steel plate (the zinc coating weight thereof was 45 g/m²) 0.7 mm thick or 0.8 mm thick, and a cold-reduced steel sheet 1.0 mm thick were used as the welded materials. A three-component-mixed gas including an argon gas, an oxygen gas, and a carbon dioxide gas was used as the shielding gas. These components were mixed at different ratios to produce a plurality of shielding gases having different compositions. Additionally, a case where a gap was provided between steel plates and a case where a gap was not provided therein were also evaluated.

The optimum range of the mixing ratio was experimentally obtained by counting the number of pits generated in the welded portion of each material.

Specifically, the hybrid welding was conducted under the following welding conditions, and the number of pits generated therein while welding was counted. Based on the results, a preferable range and an inappropriate range were defined.

As a standard, a composition of gas where the number of pits generated in a weld length of 100 mm was 0 (zero) was evaluated as "superior" while a composition of gas where the number of pits generated in a weld length of 100 mm was 1 or more was evaluated as "inferior". Based on the results, each range was defined.

### (Experiment 1 where no gap was provided and the galvannealed steel plates had the same thickness)

The welding conditions were as follows:
the thickness of the base materials were 0.7 mm (hot dip galvannealed steel plates) (both upper and lower plates);
the welding speed was 1.5 m/min;
the weld length was 100 mm;
the gap was 0 mm;
the distance between the tip and the base material was 15 mm;
the welding wire was a solid wire having ϕ 0.9 mm;
the laser output was 2.0 kW;
the welding current was 100 A;
the voltage range was 17.0 V to 23.0 V;
the distance between the laser and the arc was 2.0 mm; and
the shielding gas flow rate was 20 L/min.

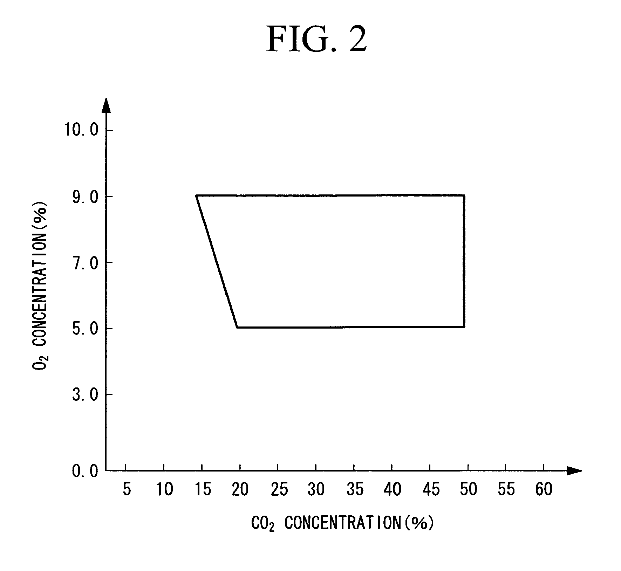

Welding was conducted at the length of 100 mm, and the number of pits was counted with respect to the weld length of 100 mm. The results are shown in Table 1. The concentration range of the oxygen gas and the carbon dioxide gas where excellent welding could be achieved is shown in Figure 2. In Figure 2, the region represented by a solid line refers to the preferable concentration range.

**Table 1**

| Oxygen Concentration (%) | Carbon dioxide concentration (%) | Gap (mm) | The number of pits | Others | Evaluation |
|---|---|---|---|---|---|
| 0.0 | 10.0 | 0 | 14 | Many pits | Inferior |
| 0.0 | 15.0 | 0 | 12 | Many pits | Inferior |
| 0.0 | 20.0 | 0 | 12 | Many pits | Inferior |
| 0.0 | 30.0 | 0 | 13 | Many pits | Inferior |
| 0.0 | 50.0 | 0 | 23 | Many pits | Inferior |
| 0.0 | 60.0 | 0 | 18 | Many pits and many spatters | Inferior |
| 3.0 | 10.0 | 0 | 20 | Many pits | Inferior |
| 3.0 | 15.0 | 0 | 15 | Many pits | Inferior |
| 3.0 | 20.0 | 0 | 16 | Many pits | Inferior |
| 3.0 | 30.0 | 0 | 16 | Many pits | Inferior |
| 3.0 | 50.0 | 0 | 6 | Many pits | Inferior |
| 5.0 | 10.0 | 0 | 15 | Many pits | Inferior |
| 5.0 | 15.0 | 0 | 8 | Many pits | Inferior |
| 5.0 | 20.0 | 0 | 0 | | Superior |
| 5.0 | 30.0 | 0 | 0 | | Superior |
| 5.0 | 50.0 | 0 | 0 | | Superior |
| 5.0 | 60.0 | 0 | 7 | Many pits and many spatters | Inferior |
| 9.0 | 10.0 | 0 | 4 | Generation of pits | Inferior |
| 9.0 | 15.0 | 0 | 0 | | Superior |
| 9.0 | 20.0 | 0 | 0 | | Superior |
| 9.0 | 30.0 | 0 | 0 | | Superior |
| 9.0 | 50.0 | 0 | 0 | | Superior |
| 9.0 | 60.0 | 0 | 3 | Generation of pits, and many spatters | Inferior |
| 10.0 | 10.0 | 0 | 5 | Many pits | Inferior |
| 10.0 | 15.0 | 0 | 2 | Generation of pits | Inferior |
| 10.0 | 20.0 | 0 | 3 | Generation of pits | Inferior |
| 10.0 | 30.0 | 0 | 1 | Generation of pits | Inferior |
| 10.0 | 50.0 | 0 | 2 | Generation of pits | Inferior |

### (Experiment 2 where a gap was provided therein and galvannealed steel plates had the same thickness)

The range where weld defects (start defects, or burn-through or hole-formation of the upper plate) were generated (referred to as "inferior") in the total length of the bead, and the range where such weld defects were not generated in the total length of the bead (i.e. preferable range referred to as "superior") were investigated where gap G was 0.7 mm (G/T = 1) and gap G was 1.0 mm (G/T > 1).

The results were summarized in Table 2 (G = 0.7 mm) and Table 3 (G = 1.0 mm). Sufficient welding could not be achieved in the entire range when the gap was 1.0 mm, as shown in Table 3.

The thickness of the base materials were 0.7 mm (hot dip galvannealed steel plates) (both upper and lower plates);
the welding speed was 2.0 m/min;
the gap between plates was 0.7 mm or 1.0 mm;
the weld length was 100 mm;
the distance between the tip and the base material was 15 mm;
the welding wire was a solid wire having ϕ 0.9 mm;
the laser output was 2.0 kW;
the welding current was 100 A;
the voltage range was 19.0 V to 22.0 V;
the distance between the laser and the arc was 2.0 mm; and
the shielding gas flow rate was 20 L/min.

**Table 2**

| Oxygen Concentration (%) | Carbon dioxide concentration (%) | Gap (mm) | The number of pits | Others | Evaluation |
|---|---|---|---|---|---|
| 0.0 | 10.0 | 0.7 | - | Start defect | Inferior |
| 0.0 | 15.0 | 0.7 | - | Burn-through of the upper plate | Inferior |
| 0.0 | 20.0 | 0.7 | - | Burn-through of the upper plate | Inferior |
| 0.0 | 30.0 | 0.7 | - | Burn-through of the upper plate | Inferior |
| 0.0 | 50.0 | 0.7 | - | Burn-through of the upper plate | Inferior |
| 0.0 | 60.0 | 0.7 | - | Hole-formation | Inferior |
| 3.0 | 10.0 | 0.7 | - | Sticking | Inferior |
| 3.0 | 15.0 | 0.7 | 0 | | Superior |
| 3.0 | 20.0 | 0.7 | 0 | | Superior |
| 3.0 | 30.0 | 0.7 | 0 | | Superior |
| 3.0 | 50.0 | 0.7 | - | Burn-through of the upper plate | Inferior |
| 5.0 | 10.0 | 0.7 | - | Sticking | Inferior |
| 5.0 | 15.0 | 0.7 | 0 | | Superior |
| 5.0 | 20.0 | 0.7 | 0 | | Superior |
| 5.0 | 30.0 | 0.7 | 0 | | Superior |
| 5.0 | 50.0 | 0.7 | 0 | | Superior |
| 5.0 | 60.0 | 0.7 | - | Hole-formation | Inferior |
| 9.0 | 10.0 | 0.7 | - | Sticking | Inferior |
| 9.0 | 15.0 | 0.7 | 0 | | Superior |
| 9.0 | 20.0 | 0.7 | 0 | | Superior |
| 9.0 | 30.0 | 0.7 | 0 | | Superior |
| 9.0 | 50.0 | 0.7 | 0 | | Superior |
| 9.0 | 60.0 | 0.7 | - | Hole-formation | Inferior |
| 10.0 | 10.0 | 0.7 | - | Many spatters | Inferior |
| 10.0 | 15.0 | 0.7 | - | Many spatters | Inferior |
| 10.0 | 20.0 | 0.7 | - | Many spatters | Inferior |
| 10.0 | 30.0 | 0.7 | - | Many spatters | Inferior |
| 10.0 | 50.0 | 0.7 | - | Many spatters | Inferior |

**Table 3**

| Oxygen Concentration (%) | Carbon dioxide concentration (%) | Gap (mm) | Others | Evaluation |
|---|---|---|---|---|
| 0.0 | 10.0 | 1.0 | Burn-through of the upper plate | Inferior |
| 0.0 | 20.0 | 1.0 | Burn-through of the upper plate | Inferior |
| 0.0 | 30.0 | 1.0 | Burn-through of the upper plate | Inferior |
| 0.0 | 50.0 | 1.0 | Hole-formation | Inferior |
| 0.0 | 60.0 | 1.0 | Hole-formation | Inferior |
| 3.0 | 30.0 | 1.0 | Burn-through of the upper plate | Inferior |
| 5.0 | 20.0 | 1.0 | Burn-through of the upper plate | Inferior |
| 5.0 | 50.0 | 1.0 | Hole-formation | Inferior |
| 5.0 | 60.0 | 1.0 | Hole-formation | Inferior |
| 9.0 | 10.0 | 1.0 | Burn-through of the upper plate | Inferior |
| 9.0 | 20.0 | 1.0 | Burn-through of the upper plate | Inferior |
| 9.0 | 30.0 | 1.0 | Burn-through of the upper plate | Inferior |
| 9.0 | 50.0 | 1.0 | Hole-formation | Inferior |
| 9.0 | 60.0 | 1.0 | Hole-formation | Inferior |
| 10.0 | 20.0 | 1.0 | Burn-through of the upper plate | Inferior |
| 10.0 | 30.0 | 1.0 | Burn-through of the upper plate | Inferior |
| 10.0 | 50.0 | 1.0 | Hole-formation | Inferior |

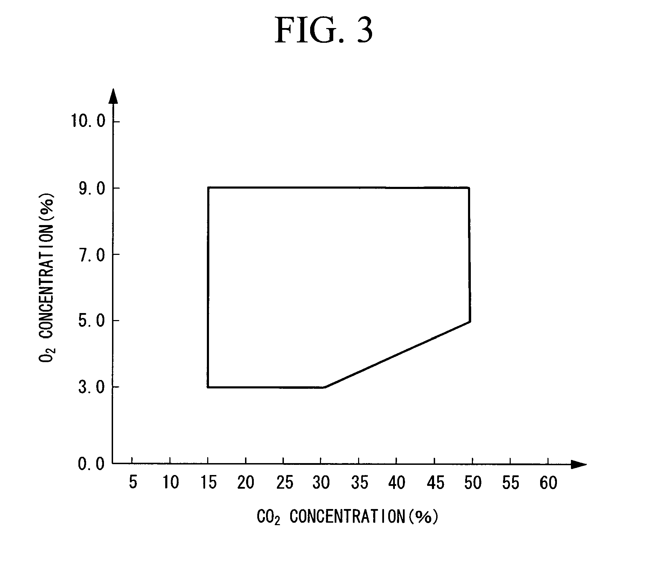

With regard to the case where the gap was 0.7 mm (G/T = 1), as shown in Table 2, the compositional ratio of the shielding gas that enabled excellent welding is shown as a graph in Figure 3. When a shielding gas having a composition within the domain shown in Figure 3 was used, excellent results could be achieved.

### (Experiment 3 where a gap was present and the thickness of each steel plate was different)

A galvannealed steel plate 0.8 mm thick and a cold-reduced steel sheet (SPCC) 1.0 mm thick were lapped where the galvannealed steel plate was the upper plate. Lap welding was conducted where the gap was 0.8 mm (equivalent to the thickness of the upper plate) and 1.0 mm (lager than the thickness of the upper plate). A range where weld defects (start defects, or burn-through or hole-formation of the upper plate) were generated (referred to as "inferior"), and the range where such weld defects were not generated (i.e. preferable range referred to as "superior") were investigated with respect to the total length of the bead.

The results are shown in Table 4 (G = 0.8 mm) and Table 5 (G = 1.0 mm). Sufficient welding could not be achieved in the entire range when the gap was 1.0 mm, as shown in Table 5.

The thickness of the base materials were:
0.8 mm (hot dip galvannealed steel plate) for the upper plate, and
1.0 mm (cold-reduced steel sheet (SPCC)) for the lower sheet;
the welding speed was 1.5 m/min;
the gap between plates was 0.8 mm or 1.0 mm;
the weld length was 100 mm;
the distance between the tip and the base material was 15 mm;
the welding wire was a solid wire having ϕ 0.9 mm;
the laser output was 2.0 kW;
the welding current was 100 A;
the voltage range was 20.0 V to 22.0 V;
the distance between the laser and the arc was 2.0 mm; and
the shielding gas flow rate was 20 L/min.

**Table 4**

| Oxygen Concentration (%) | Carbon dioxide concentration (%) | Gap (mm) | The number of pits | Others | Evaluation |
|---|---|---|---|---|---|
| 0.0 | 10.0 | 0.8 | - | Sticking | Inferior |
| 0.0 | 20.0 | 0.8 | - | Burn-through of the upper plate | Inferior |
| 0.0 | 30.0 | 0.8 | - | Burn-through of the upper plate | Inferior |
| 0.0 | 50.0 | 0.8 | - | Burn-through of the upper plate | Inferior |
| 0.0 | 60.0 | 0.8 | - | Hole-formation | Inferior |
| 3.0 | 20.0 | 0.8 | 0 | | Superior |
| 3.0 | 30.0 | 0.8 | 0 | | Superior |
| 5.0 | 10.0 | 0.8 | - | Sticking | Inferior |
| 5.0 | 20.0 | 0.8 | 0 | | Superior |
| 5.0 | 30.0 | 0.8 | 0 | | Superior |
| 5.0 | 50.0 | 0.8 | 0 | | Superior |
| 5.0 | 60.0 | 0.8 | - | Hole-formation | Inferior |
| 9.0 | 10.0 | 0.8 | 0 | | Superior |
| 9.0 | 20.0 | 0.8 | 0 | | Superior |
| 9.0 | 30.0 | 0.8 | 0 | | Superior |
| 9.0 | 50.0 | 0.8 | 0 | | Superior |
| 9.0 | 60.0 | 0.8 | - | Hole-formation | Inferior |
| 10.0 | 10.0 | 0.8 | - | Many spatters | Inferior |
| 10.0 | 20.0 | 0.8 | - | Many spatters | Inferior |
| 10.0 | 30.0 | 0.8 | - | Many spatters | Inferior |
| 10.0 | 50.0 | 0.8 | - | Many spatters | Inferior |

**Table 5**

| Oxygen Concentration (%) | Carbon dioxide concentration (%) | Gap (mm) | Others | Evaluation |
|---|---|---|---|---|
| 0.0 | 10.0 | 1.0 | Burn-through of the upper plate | Inferior |
| 0.0 | 20.0 | 1.0 | Burn-through of the upper plate | Inferior |
| 0.0 | 30.0 | 1.0 | Burn-through of the upper plate | Inferior |
| 0.0 | 50.0 | 1.0 | Hole-formation | Inferior |
| 0.0 | 60.0 | 1.0 | Hole-formation | Inferior |
| 3.0 | 20.0 | 1.0 | Burn-through of the upper plate | Inferior |
| 3.0 | 30.0 | 1.0 | Burn-through of the upper plate | Inferior |
| 5.0 | 10.0 | 1.0 | Burn-through of the upper plate | Inferior |
| 5.0 | 20.0 | 1.0 | Burn-through of the upper plate | Inferior |
| 5.0 | 30.0 | 1.0 | Burn-through of the upper plate | Inferior |
| 5.0 | 50.0 | 1.0 | Hole-formation | Inferior |
| 5.0 | 60.0 | 1.0 | Hole-formation | Inferior |
| 9.0 | 10.0 | 1.0 | Burn-through of the upper plate | Inferior |
| 9.0 | 20.0 | 1.0 | Burn-through of the upper plate | Inferior |
| 9.0 | 30.0 | 1.0 | Burn-through of the upper plate | Inferior |
| 9.0 | 50.0 | 1.0 | Hole-formation | Inferior |
| 9.0 | 60.0 | 1.0 | Hole-formation | Inferior |
| 10.0 | 10.0 | 1.0 | Burn-through in the upper plate | Inferior |
| 10.0 | 20.0 | 1.0 | Burn-through of the upper plate | Inferior |
| 10.0 | 30.0 | 1.0 | Burn-through of the upper plate | Inferior |
| 10.0 | 50.0 | 1.0 | Hole-formation | Inferior |

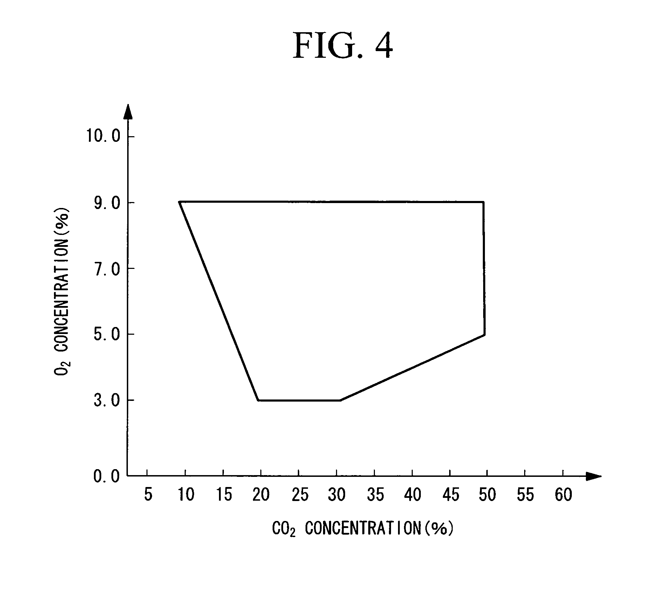

With regard to the case where the gap was 0.8 mm (G/T = 1), as shown in Table 4, the compositional ratio of the shielding gas that enabled excellent welding is shown as a graph in Figure 4. When a shielding gas having a composition within the domain shown in Figure 4 was used, excellent results could be achieved.

### (Comparative Experiment 1)

In lap welding of galvannealed steel plates only using laser welding where a gap is not provided or where a gap is provided (50 µm, 100 µm and 300 µm), the status of pit generation, underfill, burn-through of the upper plate (not joined with the lower plate) were investigated with respect to the weld length of 100 mm.

The results are shown in Table 6.

The thickness of the base materials were 0.7 mm (hot dip galvannealed steel plates) (both upper and lower plates);
the welding speed was 1.5 m/min;
the weld length was 100 mm;
the gap between plates was 0 µm, 50 µm, 100 µm and 300 µm;
the laser output was 2.0 kW;
the shielding gas was an argon gas; and
the shielding gas flow rate was 20 L/min.

**Table 6**

| Gap (µm) | The number of defects on the surface | Joining state of steel plates. | Evaluation |
|---|---|---|---|
| 0 | 45 | Many pits generated | Inferior |
| 50 | 5 | | Inferior |
| 100 | 0 | | Superior |
| 300 | 2 | Underfill, and burn-through of the upper sheet | Inferior |

In Table 6, "underfill" refers to a state where the weld bead projected downward.

In hybrid welding, in order to alleviate the generation of pits or the other weld defects when lap-welding galvannealed steel plates, the following solutions may be considered. That is, the laser output may be increased to conduct full penetration welding whereby zinc vapor can be positively emitted from the front surface or the back surface of the bead, or gap may be provided between steel plates.

However, such increase of the laser output will unfavorably increase costs for the welding facilities, and this is a problem. On the other hand, as shown in the Comparative Experiments, when a gap is provided between steel plates, the generation of pits can be prevented. However, it is difficult to control such a gap, and such a method is not practical in terms of productivity or cost-effectiveness.

Hereinafter, the reason why the composition of the shielding gas of the present invention, which is used in hybrid welding of a lap joint of a galvannealed steel plate, is limited to a certain range will be described.

The oxygen gas included therein influences removal of zinc vapor generated by evaporation of the plating layer in a lapped portion of steel plates. Specifically, if the oxygen gas is added to the shielding gas, the surface tension of the molten metal is lowered whereby zinc vapor is sufficiently emitted from the molten metal or the zinc vapor is oxidized due to the oxygen gas in the shielding gas, and the oxides thereof are confined in the molten metal. The inclusion of the oxygen gas brings about such effects.

In the present invention, no pits were generated on the bead surface where the gap was zero. Furthermore, when a gap was provided, conditions where sticking, burn-through of the upper plate, hole-formation or the like were not present was studied. Consequently, the minimum concentration of the oxygen added thereto was considered to be 5.0% by volume or higher. On the contrary, if the oxygen gas was added, the surface tension of the molten metal was lowered. Therefore, when an excessive amount of oxygen gas was added thereto, spatters were generated. In hybrid welding, a laser was used as a heat source. Therefore, it is not preferable that adhesion of spatters to a protective glass or the like which consequently brings about a decrease in irradiation energy be caused. The upper limit of the oxygen gas added thereto was considered to be 10% by volume or less.

With regard to the carbon dioxide gas, a certain amount of the gas may be required in order to contract and stabilize the arc. However, if an excessive amount of carbon dioxide gas is added in the same manner as the oxygen gas, generation of spatters will be frequent, and the arc force will be strong. Consequently, if a gap is provided therein, hole-formation will occur. Therefore, the concentration range of the carbon dioxide was considered to be 15% to 50% by volume.

### (Hybrid welding of a lap fillet joint of a galvannealed plate)

### (Experiment 4)

Using two galvannealed steel plates 1.8 mm thick, lap fillet welding was conducted where the gap between the upper and lower plates was 0 mm and the push angle of the arc torch was 20°. The number of pits in a weld length of 100 mm, the presence of bead irregularities where a continuous bead could not be formed due to occurrence of humping or the like, and generation of spatters were confirmed. A three-component mixed gas including an argon gas, a carbon dioxide gas and an oxygen gas was used as the shielding gas, and hybrid welding was conducted while modifying the compositional ratio of the carbon dioxide gas and the oxygen gas in the shielding gas.

Additionally, comparative examples using an argon gas-carbon dioxide gas-based shielding gas and an argon gas-oxygen gas-based shielding gas that are general shielding gases for MAG welding are shown below.

When bead irregularities were not present in welded samples, the center of the bead thereof was cut to confirm whether undercuts were present or not. When undercuts were not present, the sample was evaluated as "acceptable".

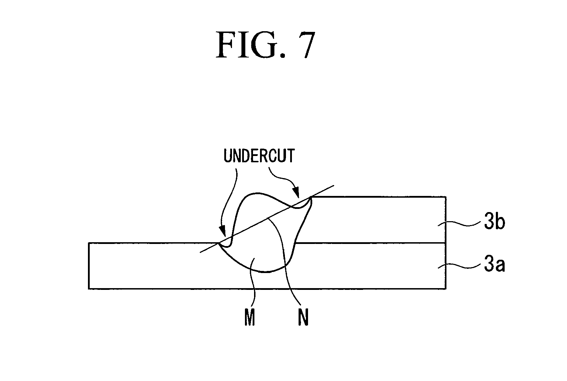

In this context, as shown in Figure 7, "undercuts" refers to a recessed structure present under line N which runs through the both edges of the bead in the cross-section of the welded portion M. Such an undercut may be the origin of fatigue crack generated due to stress concentration.

Evaluated items and evaluation standards are as follows.
(a) whether pits were generated or not and the number of pits generated;
(b) generation of bead irregularities (failure in continuous bead formation) such as humping;
(c) generation of spatters; and
(d) generation of undercuts.

Confirmation of (a) to (d) followed the following four-scale evaluation, and an overall evaluation was conducted based on the result thereof.

"Superior" refers to a state where no generation of each phenomenon was observed and the welding qualities thereof were highly acceptable;

"Fair" refers to a state where generation of each phenomenon was slightly confirmed, but the welded plates are sufficient as a joint, and therefore, the welding qualities thereof were acceptable;

"Inferior" refers to a state where generation of each phenomenon was confirmed and the welded plates were unacceptable as a joint;

"-" refers to a state where generation of bead irregularities such as humping was confirmed, and it was impossible to evaluate occurrence of the above-described phenomena.

The welding conditions were as follows.

The welding method is an arc welding using consumable electrode-based welding and pulsed arc;
the thickness of the base materials was 1.8 mm (hot dip galvannealed steel plates);
the joint type was a lapped joint;
the welding position was flat position fillet;
the welding speed was 2.0 m/min;
the weld length was 100 mm;
the gap between plates was 0;
the push angle of the arc torch was 20°;
the distance between the tip and the base material was 15 mm;
the welding wire had ϕ 1.2 mm;
the laser output was 2.0 kW;
the welding current was 180 A;
the voltage range was 22.0 V to 25.0 V;
the distance between the laser and the arc was 2.0 mm; and
the shielding gas flow rate was 20 L/min.

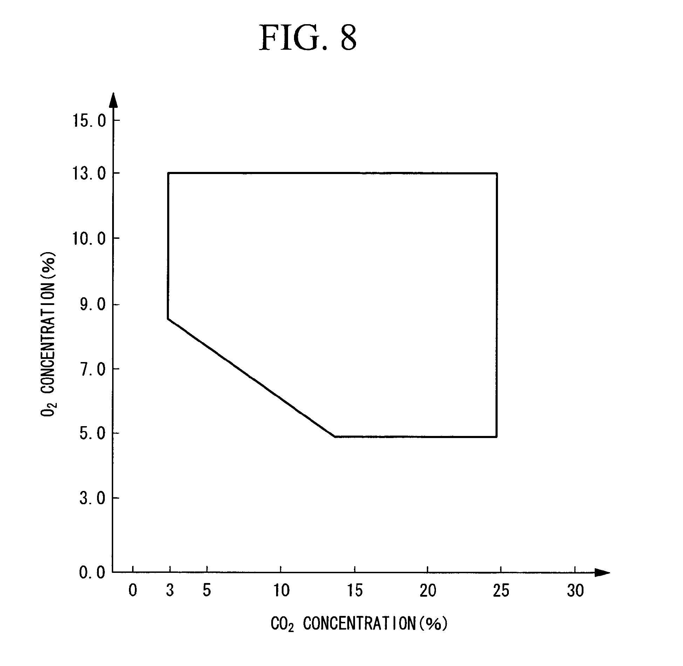

The results are shown in Table 7. With respect to concentration of the oxygen gas and the carbon dioxide gas, a preferable range, where bead irregularities, pits and undercuts were not generated, and few sputters were generated is shown in Figure 8. In Figure 8, the domain surrounded with a solid line refers to the above-described concentration region represented by the above formulas.

**Table 7**

| Gas composition (% by volume) | | | Generation of pits | | Bead irregularities | Generation of spatters | Undercuts | Overall evaluation (acceptable or unacceptable) |
|---|---|---|---|---|---|---|---|---|
| O₂ | CO₂ | Argon | The number of pits generated | Evaluation | | | | |
| 0.0 | 5.0 | Balance | 16 | Inferior | Inferior | Superior | - | Unacceptable |
| 0.0 | 10.0 | Balance | 13 | Inferior | Inferior | Superior | - | Unacceptable |
| 0.0 | 15.0 | Balance | 8 | Inferior | Inferior | Superior | - | Unacceptable |
| 0.0 | 20.0 | Balance | 6 | Inferior | Fair | Superior | Inferior | Unacceptable |
| 0.0 | 25.0 | Balance | 4 | Inferior | Fair | Fair | Inferior | Unacceptable |
| 0.0 | 30.0 | Balance | 2 | Inferior | Fair | Inferior | Inferior | Unacceptable |
| 5.0 | 0.0 | Balance | 4 | Inferior | Inferior | Superior | - | Unacceptable |
| 5.0 | 3.0 | Balance | 6 | Inferior | Inferior | Superior | - | Unacceptable |
| 5.0 | 5.0 | Balance | 2 | Inferior | Inferior | Superior | - | Unacceptable |
| 5.0 | 10.0 | Balance | 6 | Inferior | Inferior | Superior | - | Unacceptable |
| 5.0 | 15.0 | Balance | 0 | Superior | Superior | Superior | Superior | Acceptable |
| 5.0 | 20.0 | Balance | 0 | Superior | Superior | Superior | Superior | Acceptable |
| 5.0 | 25.0 | Balance | 0 | Superior | Superior | Fair | Superior | Acceptable |
| 5.0 | 30.0 | Balance | 5 | Inferior | Fair | Inferior | Inferior | Unacceptable |
| 9.0 | 3.0 | Balance | 0 | Superior | Superior | Superior | Superior | Acceptable |
| 9.0 | 5.0 | Balance | 0 | Superior | Superior | Superior | Superior | Acceptable |
| 9.0 | 10.0 | Balance | 0 | Superior | Superior | Superior | Superior | Acceptable |
| 9.0 | 15.0 | Balance | 0 | Superior | Superior | Superior | Superior | Acceptable |
| 9.0 | 20.0 | Balance | 0 | Superior | Superior | Superior | Superior | Acceptable |
| 9.0 | 25.0 | Balance | 0 | Superior | Superior | Fair | Superior | Acceptable |
| 10.0 | 0.0 | Balance | 5 | Inferior | Superior | Superior | Superior | Unacceptable |
| 10.0 | 30.0 | Balance | 2 | Inferior | Fair | Inferior | Inferior | Unacceptable |
| 13.0 | 3.0 | Balance | 0 | Superior | Superior | Superior | Superior | Acceptable |
| 13.0 | 5.0 | Balance | 0 | Superior | Superior | Superior | Superior | Acceptable |
| 13.0 | 10.0 | Balance | 0 | Superior | Superior | Superior | Superior | Acceptable |
| 13.0 | 15.0 | Balance | 0 | Superior | Superior | Superior | Superior | Acceptable |
| 13.0 | 20.0 | Balance | 0 | Superior | Superior | Superior | Superior | Acceptable |
| 13.0 | 25.0 | Balance | 0 | Superior | Superior | Fair | Superior | Acceptable |
| 13.0 | 30.0 | Balance | 2 | Inferior | Fair | Inferior | Inferior | Unacceptable |
| 15.0 | 0.0 | Balance | 3 | Inferior | Inferior | Inferior | Inferior | Unacceptable |
| 15.0 | 3.0 | Balance | 4 | Inferior | Superior | Inferior | Superior | Unacceptable |
| 15.0 | 5.0 | Balance | 5 | Inferior | Superior | Inferior | Superior | Unacceptable |
| 15.0 | 10.0 | Balance | 7 | Inferior | Superior | Inferior | Superior | Unacceptable |
| 15.0 | 15.0 | Balance | 1 | Inferior | Superior | Inferior | Superior | Unacceptable |
| 15.0 | 20.0 | Balance | 2 | Inferior | Superior | Inferior | Superior | Unacceptable |
| 15.0 | 25.0 | Balance | 0 | Superior | Superior | Inferior | Superior | Unacceptable |

### (Experiment 5)

Using a cold-reduced steel sheet 1.2 mm thick as a upper plate and a galvannealed steel plate 1.6 mm thick as a lower plate, lap fillet welding was conducted where the gap between the upper and lower plates was 0 mm and the push angle of the arc torch was 20°. In the same manner as Experiment 4, the number of pits in a weld length of 100 mm, presence of bead irregularities where a continuous bead could not be formed due to occurrence of humping or the like, and generation of spatters was confirmed.

A three-component mixed gas including an argon gas, a carbon dioxide gas and an oxygen gas was used as the shielding gas, and hybrid welding was conducted while modifying the compositional ratio of the carbon dioxide gas and the oxygen gas in the shielding gas. Additionally, an Ar-CO₂-based shielding gas and an Ar-O₂-based shielding gas that are general shielding gases for MAG welding were used as comparative experiments.

When bead irregularities were not present in welded samples, the center of the bead thereof was cut in the same manner as Experiment 4 to confirm whether undercuts were present or not. When undercuts were not present, the sample was evaluated as "acceptable".

The welding conditions were as follows.

The welding method is an arc welding using=consumable electrode-based welding and pulsed arc;

The base materials were a cold-reduced steel sheet 1.2 mm thick as the upper sheet and an hot dip galvannealed steel plate 1.6 mm thick as the lower sheet;

The joint type was a lapped joint;

The welding position was flat position fillet;
the welding speed was 2.5 m/min;
the weld length was 100 mm;
the gap between plates was 0;
the push angle of the arc torch was 20°;
the distance between the tip and the base material was 15 mm;
the welding wire had ϕ 1.2 mm;
the laser output was 2.0 kW;
the welding current was 240 A;
the voltage range was 22.0 V to 25.0 V;
the distance between the laser and the arc was 2.0 mm; and
the shielding gas flow rate was 20 L/min.

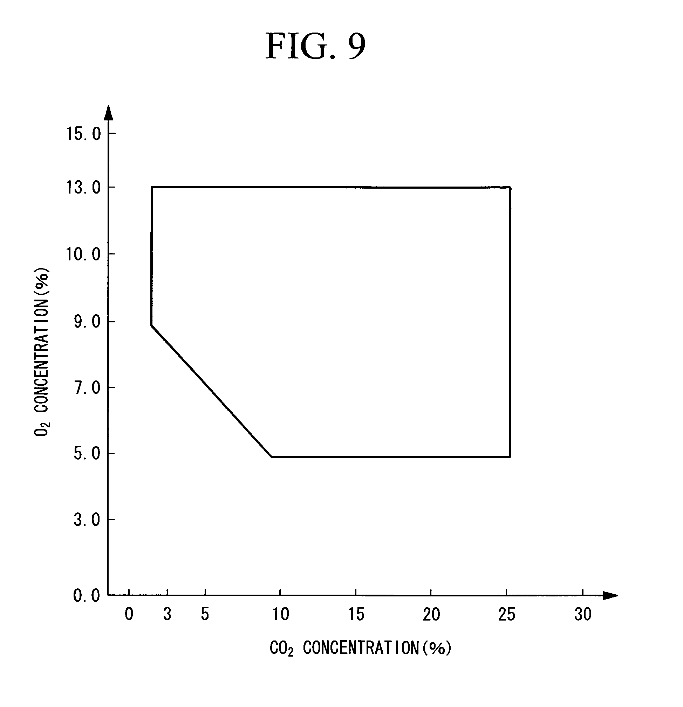

The results are shown in Table 8. With respect to concentration of the oxygen gas and the carbon dioxide gas, a preferable range where generation of bead irregularities, pits and undercuts were not generated, and few sputters were generated is shown in Figure 9. In Figure 9, the domain surrounded with a solid line refers to the above-described concentration region represented by the above formulas.

**Table 8**

| Gas composition (% by volume) | | | Generation of pits | | Bead irregularities | Generation of spatters | Undercuts | Overall evaluation (acceptable or unacceptable) |
|---|---|---|---|---|---|---|---|---|
| O₂ | CO₂ | Argon | The number of pits generated | Evaluation | | | | |
| 0.0 | 5.0 | Balance | 8 | Inferior | Inferior | Superior | - | Unacceptable |
| 0.0 | 10.0 | Balance | 3 | Inferior | Inferior | Superior | - | Unacceptable |
| 0.0 | 15.0 | Balance | 4 | Inferior | Superior | Superior | Inferior | Unacceptable |
| 0.0 | 20.0 | Balance | 5 | Inferior | Superior | Superior | Inferior | Unacceptable |
| 0.0 | 25.0 | Balance | 1 | Inferior | Superior | Fair | Inferior | Unacceptable |
| 0.0 | 30.0 | Balance | 3 | Inferior | Fair | Inferior | Inferior | Unacceptable |
| 5.0 | 0.0 | Balance | 3 | Inferior | Inferior | Superior | - | Unacceptable |
| 5.0 | 3.0 | Balance | 5 | Inferior | Inferior | Superior | - | Unacceptable |
| 5.0 | 5.0 | Balance | 5 | Inferior | Inferior | Superior | - | Unacceptable |
| 5.0 | 10.0 | Balance | 0 | Superior | Superior | Superior | Superior | Acceptable |
| 5.0 | 15.0 | Balance | 0 | Superior | Superior | Superior | Superior | Acceptable |
| 5.0 | 25.0 | Balance | 0 | Superior | Superior | Fair | Superior | Acceptable |
| 5.0 | 30.0 | Balance | 2 | Inferior | Fair | Inferior | Inferior | Unacceptable |
| 9.0 | 3.0 | Balance | 0 | Superior | Superior | Superior | Superior | Acceptable |
| 9.0 | 5.0 | Balance | 0 | Superior | Superior | Superior | Superior | Acceptable |
| 9.0 | 15.0 | Balance | 0 | Superior | Superior | Superior | Superior | Acceptable |
| 9.0 | 25.0 | Balance | 0 | Superior | Superior | Fair | Superior | Acceptable |
| 10.0 | 0.0 | Balance | 1 | Inferior | Inferior | Superior | - | Unacceptable |
| 10.0 | 30.0 | Balance | 4 | Inferior | Fair | Inferior | Inferior | Unacceptable |
| 13.0 | 3.0 | Balance | 0 | Superior | Superior | Superior | Superior | Acceptable |
| 13.0 | 5.0 | Balance | 0 | Superior | Superior | Superior | Superior | Acceptable |
| 13.0 | 10.0 | Balance | 0 | Superior | Superior | Superior | Superior | Acceptable |
| 13.0 | 15.0 | Balance | 0 | Superior | Superior | Superior | Superior | Acceptable |
| 13.0 | 25.0 | Balance | 0 | Superior | Superior | Fair | Superior | Acceptable |
| 13.0 | 30.0 | Balance | 0 | Superior | Fair | Inferior | Inferior | Unacceptable |
| 15.0 | 0.0 | Balance | 3 | Inferior | Inferior | Inferior | - | Unacceptable |
| 15.0 | 5.0 | Balance | 0 | Superior | Superior | Inferior | Superior | Unacceptable |
| 15.0 | 10.0 | Balance | 0 | Superior | Superior | Inferior | Superior | Unacceptable |
| 15.0 | 15.0 | Balance | 0 | Superior | Superior | Inferior | Superior | Unacceptable |
| 15.0 | 25.0 | Balance | 0 | Superior | Superior | Inferior | Superior | Unacceptable |

Hereinafter, the reason why the composition of the shielding gas of the present invention, which is used in hybrid welding of lap fillet joints of galvannealed steel plates, is limited to a certain range will be described.

The oxygen gas included therein influences removal of zinc vapor generated by evaporation of the plating layer in a lapped portion of steel plates. Specifically, if an oxygen gas is added to the shielding gas, the surface tension of the molten metal is lowered whereby zinc vapor is sufficiently emitted from the molten metal or the zinc vapor is oxidized due to the oxygen gas in the shielding gas, and the oxides thereof are confined in the molten metal. The inclusion of the oxygen gas brings about such effects.

However, the addition of an oxygen gas to the shielding gas causes impairment in the toughness of the welded metal due to shortage of deoxidation of the welded metal or the like. On the other hand, because galvannealed steel plates are mainly used as materials for a thin plate structure, such impairment in toughness will not be a major problem. In fact, if an oxygen gas is not added thereto, there will be a problem wherein defects such as pits or blowholes are likely generated, and such defects will further deteriorate the toughness.

In addition, it was confirmed that the weld joint of the present invention had sufficient tensile strength.

In hybrid welding of lap fillet joints of galvannealed steel plates of the present invention, the number of the pits generated on the bead surface was zero where the gap between steel plates was 0 mm. Additionally, when welding was conducted at a welding speed of 2.0 m/min or more, welding conditions were studied where bead irregularities such as humping, or undercut generation could be prevented. Consequently, it was concluded that the minimum concentration of the oxygen gas added thereto was adjusted to 5.0% or higher.

On the other hand, because a laser is used as a heat source in hybrid welding, the time required for solidification of the molten pool will be longer. Accordingly, when an excessive amount of oxygen gas is added thereto, liquidity of the molten pool is excessively increased whereby sputters will be easily generated. Because adhesion of spatters to a protective glass or the like that unfavorably decreases irradiation energy of the laser light is not preferable, the upper limit of the concentration may be 13% or less.

The addition of a certain amount of a carbon dioxide gas is required in order to contract and stabilize arc. However, if an excessive amount of carbon dioxide gas is added in the same manner as the above oxygen gas, then, generation of spatters will be remarkably increased, and arc force will also be increased whereby undercuts are easily generated. Therefore, the concentration of the carbon dioxide gas may be within a range of 3% to 25%.

### INDUSTRIAL APPLICABILITY

According to the hybrid welding method and the shielding gas used therefor of the present invention, highly-efficient and high-quality hybrid welding can be achieved in galvannealed steel plates that are used as materials for automobiles, among others. Therefore, the present invention can be applied to various industrial fields such as the automotive industry, and the present invention has high industrial applicability.

## Claims

1. A shielding gas for hybrid welding which is used for lap welding of steel plates by using laser welding and arc welding in combination where at least one of the steel plates is a galvannealed steel plate, the shielding gas comprising:
a carbon dioxide gas;
an oxygen gas; and
the balance being an argon gas,
wherein mixing ratios of the carbon dioxide gas and the oxygen gas are adjusted to a range of 15 ≤ A ≤ 50, 5 ≤ B ≤ 9, and B ≥ 21 - 0.8A when the gap between the steel plates is zero, where "A" refers to the volume percentage of the carbon dioxide gas in the shielding gas, and "B" refers to the volume percentage of the oxygen gas in the shielding gas.

2. A shielding gas for hybrid welding which is used for lap welding of steel plates by using laser welding and arc welding in combination where at least one of the steel plates is a galvannealed steel plate, the shielding gas comprising:
a carbon dioxide gas;
an oxygen gas; and
the balance being an argon gas,
wherein mixing ratios of the carbon dioxide gas and the oxygen gas are adjusted to a range of 15 ≤ A ≤ 50, 3 ≤ B ≤ 9, and B ≥ 0.1A when G/T is 1 or less and the thicknesses of the steel plates are the same, where "A" refers to the volume percentage of the carbon dioxide gas in the shielding gas, "B" refers to the volume percentage of the oxygen gas in the shielding gas, "G" refers to the gap between the steel plates, and "T" refers to the thickness of the steel plate adjacent to a welding torch.

3. A shielding gas for hybrid welding which is used for lap welding of steel plates by using laser welding and arc welding in combination where at least one of the steel plates is a galvannealed steel plate, the shielding gas comprising:
a carbon dioxide gas;
an oxygen gas; and
the balance being an argon gas,
wherein mixing ratios of the carbon dioxide gas and the oxygen gas are adjusted to a range of 10 ≤ A ≤ 50, 3 ≤ B ≤ 9, B ≥ 0.1A, and B ≥ 15 - 0.6A when G/T is 1 or less and the thicknesses of the steel plates are different, where "A" refers to the volume percentage of the carbon dioxide gas in the shielding gas, "B" refers to the volume percentage of the oxygen gas in the shielding gas, "G" refers to the gap between the steel plates, and "T" refers to the thickness of the steel plate adjacent to a welding torch.

4. A hybrid welding method for lap welding of steel plates by using laser welding and arc welding in combination where at least one of the steel plates is a galvannealed steel plate, the method comprising:
using the shielding gas according to Claim 1 when G/T is 0;
using the shielding gas according to Claim 2 when G/T is 1 or less and the thicknesses of the steel plates are the same; or
using the shielding gas according to Claim 3 when G/T is 1 or less and the thicknesses of the steel plates are different.

5. A shielding gas for hybrid welding which is used for lap fillet welding of steel plates that are both galvannealed steel plates by using laser welding and arc welding in combination, the shielding gas comprising:
a carbon dioxide gas;
an oxygen gas; and
the balance being an argon gas,
wherein mixing ratios of the carbon dioxide gas and the oxygen gas are adjusted to a range of 3 ≤ A ≤ 25, 5 ≤ B ≤ 13, and B ≥ 10 - 0.33A, where "A" refers to the volume percentage of the carbon dioxide gas in the shielding gas, and "B" refers to the volume percentage of the oxygen gas in the shielding gas.

6. A shielding gas for hybrid welding which is used for lap fillet welding of steel plates by using laser welding and arc welding in combination where one of the steel plates is a galvannealed steel plate, the shielding gas comprising:
a carbon dioxide gas;
an oxygen gas; and
the balance being an argon gas,
wherein mixing ratios of the carbon dioxide gas and the oxygen gas are adjusted to a range of 3 ≤ A ≤ 25, 5 ≤ B ≤ 13, and B ≥ 10.5 - 0.5A, where "A" refers to the volume percentage of the carbon dioxide gas in the shielding gas, and "B" refers to the volume percentage of the oxygen gas in the shielding gas.

7. A hybrid welding method for lap fillet welding of steel plates that are both galvannealed steel plates by using laser welding and arc welding in combination, the method comprising: using the shielding gas according to Claim 5.

8. A hybrid welding method for lap fillet welding of steel plates by using laser welding and arc welding in combination where one of steel plates is a galvannealed steel plate, the method comprising: using the shielding gas according to Claim 6.
